# EUROPÄISCHE PATENTANMELDUNG

(11) **EP 3 960 440 A1**
(43) Veröffentlichungstag der Anmeldung: **02.03.2022**
(21) Anmeldenummer: 21188395.4
(22) Anmeldetag: 29.07.2021
(51) Int. Cl.: B32B 7/05, B32B 3/26, B32B 5/02, B32B 5/18, B32B 7/027, B32B 25/10, B32B 27/12

(54) **GEWEBEVERSTÄRKTES FOLIENLAMINAT**

(30) Priorität: 31.08.2020 DE 102020210924
(71) Anmelder: Benecke-Kaliko AG, 30419 Hannover (DE)
(72) Erfinder: Rost, Eberhard, 30419 Hannover (DE); Rothenberger, Nikolai, 30419 Hannover (DE); Hülsewede, Volker, 30419 Hannover (DE)
(74) Vertreter: Continental Corporation

(57) **Zusammenfassung**

Folienlaminat mit einer ein- oder mehrlagigen Deckfolie und einer unterhalb der Deckfolie angeordneten und mit letzterer verbundenen Unterfolie, wobei auf der Rückseite der Deckfolie mindestens eine zwischen Unterfolie und Deckfolie angeordnete Gewebelage vorgesehen ist, wobei die Deckfolie und die Unterfolie aus thermisch miteinander verschmelzbaren oder verbindbaren Materialien bestehen und die Gewebelage Maschen in einer solchen Ausbildung aufweist, dass die Deckfolie und die Unterfolie durch die Maschenleerräume oder Maschenöffnungen hindurch miteinander thermisch verschmolzen sind.

## Beschreibung

Die Erfindung betrifft ein Folienlaminat mit einer ein- oder mehrlagigen Deckfolie und einer unterhalb der Deckfolie angeordneten und mit letzterer verbundenen Unterfolie, wobei auf der Rückseite der Deckfolie mindestens eine zwischen Unterfolie und Deckfolie angeordnete Gewebelage vorgesehen ist.

Zur dekorativen Gestaltung oder zum Schutz der Oberflächen verschiedenster Gegenstände ist der Einsatz von Beschichtungen, Verkleidungen oder Überzügen bekannt, bei Einsatz von im Wesentlichen natürlichen Bezugsstoffen oft in Form von so genannten "Nähkleidern".

Unter dem Begriff der "Nähkleid" versteht man einen Überzug oder auch die Außenhülle für ein Form- oder Trägerteil, wobei mehrere Stücke oder Teile eines Bezugsstoffs oder eines flächig ausgebildeten Bezugsmittels mit Hilfe von Funktionsnähten verbunden werden. Funktionsnähte sind im Unterschied zu Ziernähten solche Nähte, die die Einzelteile zur Herstellung des Überzugs oder der Hülle zugfest, formgebend, formfest und belastbar verbinden. Mit einem solcherart hergestellten Nähkleid kann ein Formteil kaschiert werden, etwa um das Formteil zu dekorieren oder auch um das Material bzw. die Oberfläche des Formteils zu schützen.

Nähkleider, insbesondere solche aus teuren Materialien wie etwa Leder, werden beispielsweise zur Kaschierung von Innenraumteilen eines Kraftfahrzeugs verwendet, etwa für die Verkleidung von Sitzen, Armaturenbretter Türen etc. Unter "Kaschieren" versteht man das flächige Verbinden mehrerer Materialien, vorzugsweise unter Nutzung von Klebstoff. Auf solche Art kaschierte Innenverkleidungsteile geben dem Innenraum eines Fahrzeugs ein sehr hochwertiges Erscheinungsbild. Nähkleider werden aber auch für Polstermöbel verwendet, auch in der Täschnerei und Sattlerei und bei allerlei weiteren Bezügen von Gegenständen. Nähkleider sind in ihrer Herstellung besonders aufwändig und bedürfen auch auf der Rückseite des jeweiligen Nahtbereichs von Funktionsnähten einer besonderen Behandlung, beispielsweise einer Nahtabdeckung oder einer entsprechenden Ausnehmung für die Nahtwulst im Trägerteil.

Aus Kostengründen und für die Serienproduktion werden für das Kaschieren von Trägerteilen anstelle von natürlichen Materialien oft Kunststofffolien verwendet, die meistens mehrlagig aufgebaut sind und zum Erreichen einer entsprechend Haptik mit einer Schaumschicht hinterlegt sind. So ist es üblich, dass eine kompakte, härtere Deckfolie mit einer Narbung versehen wird, die z. B. einer Ledernarbung ähnlich sein kann, und auf ihrer Rückseite mit einer Schaumschicht verklebt oder thermisch verbunden wird. Das optische Erscheinungsbild eines Nähkleider lässt sich bisher jedoch mit solchen Folien kaum erreichen.

Das liegt zum einen daran, dass Kunststofffolien ohne weitere Maßnahmen nur sehr schlecht mit Funktionsnähten aus einzelnen Teilen hergestellt werden können, da u.a. die hohe Dehnfähigkeit und die im Vergleich zu natürlichen Materialien teilweise geringere Festigkeit der Kunststofffolien dies nicht erlaubt. Beim Vernähen von Schaumfolienlaminaten sind daher derzeit nur Nähkleider mit Ziernähten darstellbar. Funktionsnähte, d.h. Nähte die den Verbund der einzelnen Zuschnitte sicherstellen, sind nur mit textilverstärkten Folien bzw. Schaumlaminaten möglich. So gab es im Stand der Technik bereits Versuche, die Kunststofffolien rückseitig mit Verstärkungslagen, beispielsweise Gewebe- oder Textillagen zu versehen, um die Dehnung zu verringern und dem Material eine für das Erstellen von Funktionsnähten ausreichende Haltbarkeit zu geben. Mit dem Begriff Gewebe- oder Textillage sind hier zusammenfassend textile flächenförmige Gebilde bezeichnet, nämlich gewebte, gestrickte oder gewirkte Flächengebilde.

Um ein solches Verbundmaterial mit der aufgrund der gewünschten Haptik erforderlichen rückseitigen Schaumbeschichtung zu versehen, ist es bisher üblich, einen Kleber zu verwenden, da die Materialien von Gewebe- oder Textillagen und Kunststoffschaum anderweitig kaum sicher und dauerfest zu verbinden sind. Die Verwendung von Kleber wiederum bedingt eine Reihe von Problemen im Herstellungsprozess, die im Wesentlichen durch die im Kleber enthaltenen teilweise explosiven oder gesundheitsschädlichen Lösungsmittel verursacht werden.

Die DE 10 2017 221 414 A1 offenbart ein Kunststofffolienlaminat mit einer Deckfolie und einer darunter angeordneten Schicht aus geschäumtem Kunststoffmaterial. Dabei kann zwischen Deckfolie und Schaumschicht oder unterhalb der Schaumschicht ein textiles Flächengebilde angeordnet sein, wobei die Schichten thermisch oder mittels Kleber verbunden werden können. Eine thermische Verbindung zwischen Textilien und Kunststoffmaterialien ist nicht näher dargestellt und hat sich auch im Stand der Technik als ungeeignet erwiesen, solange Textilien betroffen sind und nicht etwa Kunststofffasern.

Die EP 3 533 600 A1 offenbart eine Folie, bei der zwischen einer Deckschicht und einer Schaumschicht eine Textilschicht angeordnet sein kann. Die Textilschicht oder -lage ist mithilfe eines Klebers sowohl an die Rückseite der Deckschicht als auch an die Schaumschicht angebunden. Die Nutzung eines Klebers bedingt auch hier die bereits genannten Probleme im Herstellungsprozess. Das Textil kann als Gewebe, als Vlies oder als Maschenware, Gestrick oder Gewirk ausgebildet sein und aus Naturfasern oder synthetischen Fasern bestehen bzw. ein Mischgewebe daraus darstellen.

Die Aufgabe der vorliegenden Erfindung bestand demnach in der Bereitstellung einer für ein Nähkleid geeigneten Folie als Folienlaminat, bei der auch Funktionsnähte ohne weiteres hergestellt werden können und bei deren Herstellung auf den Einsatz von Klebermaterialien vollständig oder weitestgehend verzichtet werden kann. Ebenfalls bestand die Aufgabe in der Bereitstellung eines entsprechenden Herstellverfahrens.

Gelöst wird diese Aufgabe durch die Merkmale des Hauptanspruchs. Weitere vorteilhafte Ausbildungen sind in den Unteransprüchen offenbart.

Dabei bestehen die Deckfolie und die Unterfolie aus thermisch miteinander verschmelzbaren oder verbindbaren Materialien. Die Gewebelage weist Maschen in einer solchen Ausbildung auf, dass die Deckfolie und die Unterfolie durch die Maschenleerräume oder Maschenöffnungen hindurch miteinander thermisch verschmolzen sind.

Damit ist die zwischen Deckfolie und Schaumschicht angeordnete Gewebelage ohne Zusatz von Kleber im Folienverbund fest verankert und gibt dem Folienlaminat die entsprechende Festigkeit, die für die weitere Verarbeitung zu beispielsweise einem Nähkleid erforderlich ist. Durch die eingebundene Gewebelage wird so die Dehnung und die Haltbarkeit des Folienverbunds auf die jeweilige Verwendung angepasst.

Das Laminieren der einzelnen Schichten, auch des Textils und der Schäume, erfolgt im Sinne der verfahrensgemäßen Ausbildung ohne Kleber nur durch Einwirkung von Druck und Temperatur. Dadurch wird der Laminierprozess umweltschonend und kostengünstig durchgeführt. Die chemische Zusammensetztung der Gewebelage bzw. des Textils hat dabei keinen Einfluss auf die Verbundeigenschaften der Folienlagen als solche. Der besondere Vorteil liegt also darin, dass das Gewebe oder Textil also bezogen auf seine chemische Faserzusammensetztung frei wählbar ist.

Darüber hinaus ist es bei den erfindungsgemäßen Folienlaminat einfach, die Dicke des Laminats durch entsprechende Dicken der zusammengesetzten Lagen zu variieren und auf den Einsatzzweck anzupassen. Dadurch, dass das erfindungsgemäße Folienlaminat mit Funktionsnähten zu Nähkleidern verarbeitet werden kann, ist es dann möglich, beispielsweise bei der Verkleidung eines Kraftfahrzeuginnenraums, Nähkleider herzustellen, die zum Teil aus natürlichen Materialien und zum Teil aus den mit den erfindungsgemäßen und naturidentisch geprägten und gefärbten Folienlaminat bestehen. Die geprägten Folienlaminate können dann in der Dicke, insbesondere durch die Dicke der Unterfolie/Schaumlage, genau an die naturidentischen Materialien angepasst und dort eingesetzt werden, wo etwa besondere Beanspruchungen zu schnell zu einem abgegriffenen Aussehen der Naturmaterialien führen könnten. Diese besondere Eigenschaft lässt auch die gesamte Verkleidung eines Innenraums insgesamt kostengünstiger werden. Das gilt natürlich genauso für alle anderen Arten von Gegenständen, die mit Nähkleider kaschiert werden können, etwa Möbel, Taschen, Koffer etc.

Eine vorteilhafte Weiterbildung besteht darin, dass mindestens eine der Lagen der Deckfolie aus einem thermoplastischen Polyolefin (TPO) besteht. Deckfolien aus thermoplastischem Polyolefine haben sich im täglichen Einsatz als besonders haltbar und widerstandsfähig erwiesen und sind daher für die oben genannten Zwecke insbesondere der Verbindung von natürlichen und künstlichen Materialien besonders geeignet. In diesem Zusammenhang besteht natürlich eine besonders einfache und vorteilhafte Ausbildung darin, dass mindestens eine der Lagen der Deckfolie als TPO-Kompaktfolie ausgebildet ist. Der Vorteil einer kompakten TPO-Deckschicht darin, dass diese im Gegensatz zu den üblicherweise genutzten PVC-Schichten besondere Kälteflexibilität und Alterungsbeständigkeit besitzt und geringe Emissionen aufweist. Im Vergleich zu den auf Polyurethan basierten Materialien bietet sie zudem preisliche Vorteile.

Eine weitere vorteilhafte Ausbildung besteht darin, dass die Deckfolie aus ihrer Außenseite lackiert ist, vorzugsweise mit einem Lack auf Polyurethanbasis. Auch dadurch wird die Haltbarkeit und die äußere Eindruckfestigkeit der Oberflächenfolie positiv beeinflusst.

Eine weitere vorteilhafte Ausbildung besteht darin, dass das Folienlaminat als Schaumfolienlaminat ausgebildet ist, bei dem die Unterfolie als mit der Deckfolie thermisch verschmolzene Schaumfolie ausgebildet ist, vorzugsweise aus einem Polyolefinschaum. Ein solches Folienlaminat besitzt eine angenehmer Haptik, wobei ein relativ weicher und dennoch fester Eindruckwiderstand spürbar wird, ein so genannter "Soft Touch Effekt", der bei vielen beschichteten Gegenständen vom Kunden gewünscht wird.

Eine weitere vorteilhafte Ausbildung besteht darin, dass die Unterfolie als mit der Deckfolie thermisch verschmolzene TPO-Kompaktfolie ausgebildet ist. Bei einer solchen Ausbildung ist das erfindungsgemäße Folienlaminat für Anwendungszwecke geeignet, die etwa in die Richtung fester und belastbarer Abdeckungen gehen oder auch für Schutzbeschichtungen von harten Gegenständen.

Eine weitere vorteilhafte Ausbildung besteht darin, dass die Gewebelage als Textillage oder als Glasfasergewebe ausgebildet ist. Durch die Auswahl von Textilart und Aufbau, auch etwa als Mischtextil aus natürlichen und künstlichen Fasern, lässt sich auch in Bezug auf die Haptik eine Anpassung an natürlichen Materialien finden. Soweit andererseits eine gewisse Brandhemmung für die beschichteten Körper gewünscht ist, können Glasfasern zu entsprechenden Geweben oder Gewirken verarbeitet und als Lage in dem erfindungsgemäßen Folienlaminat vorgesehen werden.

Eine weitere vorteilhafte Ausbildung besteht darin, dass das Folienlaminat rückseitig mit einer Schicht eines Primers zur Verklebung oder Verbindung mit weiteren Materialien versehen ist. Das erleichtert das Anbringen des Folienlaminats auf jedweden Oberflächen von zu beschichtenden Körpern.

Wie bereits oben dargestellt, lässt sich mit dem erfindungsgemäßen Folienlaminat besonders vorteilhaft ein Nähkleid mit Funktionsnähten herstellen, vorzugsweise auch so, dass das Nähkleid mindestens teilweise aus einem erfindungsgemäßen Folienlaminat und teilweise aus natürlichen Materialien besteht.

Ein weitere vorteilhafte Anwendungszweck ist die Herstellung einer Laderaumabdeckung, Beschichtung oder einer Dachbahn aus einem erfindungsgemäßen Folienlaminat.

Ein besonders geeignetes Verfahren zur Herstellung eines erfindungsgemäßen Folienlaminats besteht darin, dass Deckfolie und Unterfolie aus thermisch miteinander verschmelzbaren oder verbindbaren Materialien bestehen und durch die Maschenleerräume hindurch unter Aufbringen von Temperatur und Druck miteinander verschmolzen werden, vorzugsweise mit Hilfe von Walz- oder Kalanderwerken. Durch einen solchen, während der thermischen Verbindung aufgebrachten Pressdruck werden die thermisch miteinander zu verschmelzenden Folien besonders gut durch die Maschenleerräume oder Maschenöffnungen hindurch gedrückt und miteinander thermisch verbunden.

Anhand eines Ausführungsbeispiels soll die Erfindung näher erläutert werden.

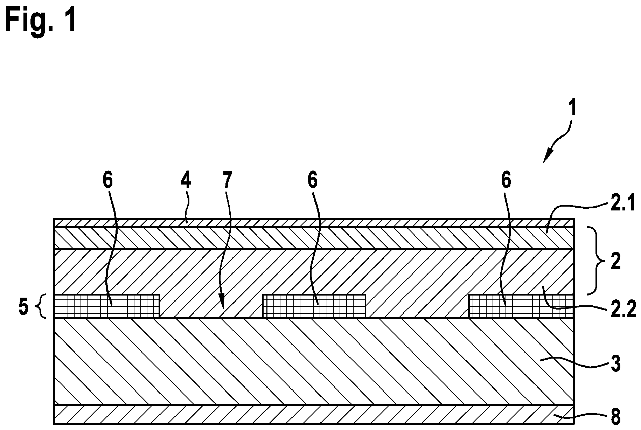

Hierzu zeigt Fig. 1 im Querschnitt einen Ausschnitt aus einem Folienlaminat 1 mit einer zweilagig ausgebildeten Deckfolie 2 und einer unterhalb der Deckfolie angeordneten und mit letzterer verbundenen Unterfolie 3. Die Deckfolie 2 besteht dabei aus thermoplastischem Polyolefin und weist die Lagen oder Schichten 2.1 und 2.2 auf, die als Coextrudat hergestellt werden. Bei der Lage 2.1 handelt es sich um eine auf ihrer Dekorseite optisch und haptisch optimierten TPO-Variante Typ A, während es sich bei der Lage 2.2 um eine in Bezug auf verringertes Dehnverhalten und Festigkeit optimierte TPO-Variante Typ B handelt.

Die äußere Oberfläche der Lage oder Schicht 2.1 ist hier mit einem Polyurethan-Lack 4 versehen.

Auf der Rückseite der Deckfolie 2 ist mindestens eine zwischen Unterfolie 3 und Deckfolie 2 bzw. Lage 2.2 angeordnete Gewebelage 5 vorgesehen. Die Gewebelage 5 ist hier als Textillage ausgebildet und weist Maschen in einer solchen Ausbildung auf, dass die Deckfolie 2 bzw. deren Lage 2.2 und die Unterfolie 3 durch die zwischen den jeweiligen Textilfasern oder Filamentbündel 6 vorhandenen Maschenleerräume oder -öffnungen 7 hindurch miteinander thermisch verschmolzen sind.

Die Unterfolie 3 ist hier als mit der Deckfolie 2 thermisch verschmolzene Schaumfolie ausgebildet und besteht aus einem Polyolefinschaum, so dass das Folienlaminat 1 hier also ein so genanntes Schaumfolienlaminat bildet.

Bei dem hier gezeigten Ausführungsbeispiel ist das Folienlaminat rückseitig, nämlich auf der Unterseite der Unterfolie 3 bzw. Schaumschicht, noch mit einem Primer 8 beschichtet, der eine bessere Anbindbarkeit von weiteren Bauteilen oder Schichten durch Kleben oder Hinterschäumen erlaubt.

### Bezugszeichenliste

### (Teil der Beschreibung)

- 1: Folienlaminat
- 2: Deckfolie
- 2.1: Lage 1, thermoplastisches Polyolefin Typ A
- 2.2: Lage 2, thermoplastisches Polyolefin Typ B
- 3: Unterfolie / Schaumfolie
- 4: Polyurethan-Lack
- 5: Textillage (Gewebelage)
- 6: Textilfasern / Filamentbündel
- 7: Maschenleeraum oder -öffnung
- 8: Primer

## Patentansprüche

1. Folienlaminat (1) mit einer ein- oder mehrlagigen Deckfolie (2, 2.1, 2.2) und einer unterhalb der Deckfolie (2) angeordneten und mit letzterer verbundenen Unterfolie (3), wobei auf der Rückseite der Deckfolie (2) mindestens eine zwischen Unterfolie und Deckfolie angeordnete Gewebelage (5) vorgesehen ist, **dadurch gekennzeichnet, dass** die Deckfolie (2) und die Unterfolie (3) aus thermisch miteinander verschmelzbaren oder verbindbaren Materialien bestehen und die Gewebelage (5) Maschen in einer solchen Ausbildung aufweist, dass die Deckfolie (2) und die Unterfolie (3) durch die Maschenleerräume oder Maschenöffnungen (7) hindurch miteinander thermisch verschmolzen sind.

2. Folienlaminat (1) nach Anspruch 1, bei dem mindestens eine der Lagen (2.1, 2.2) der Deckfolie (2) aus einem thermoplastischen Polyolefin (TPO) besteht.

3. Folienlaminat (1) nach Anspruch 1 oder 2, bei dem mindestens eine der Lagen (2.1, 2.2) der Deckfolie (2) als TPO-Kompaktfolie ausgebildet ist.

4. Folienlaminat (1) nach einem der Ansprüche 1 bis 3, bei dem die Deckfolie (2) auf ihrer Außenseite lackiert ist, vorzugsweise mit einem Lack (4) auf Polyurethanbasis.

5. Folienlaminat (1) nach einem der Ansprüche 1 bis 4, ausgebildet als Schaumfolienlaminat, bei dem die Unterfolie (3) als mit der Deckfolie (2) thermisch verschmolzene Schaumfolie ausgebildet ist, vorzugsweise aus einem Polyolefinschaum.

6. Folienlaminat (1) nach einem der Ansprüche 1 bis 4, bei dem die Unterfolie (3) als mit der Deckfolie (2) thermisch verschmolzene TPO-Kompaktfolie ausgebildet ist.

7. Folienlaminat (1) nach einem der Ansprüche 1 bis 6, bei dem die Gewebelage (5) als Textillage oder als Glasfasergewebelage ausgebildet ist.

8. Folienlaminat (1) nach einem der Ansprüche 1 bis 7, welches rückseitig mit einer Schicht eines Primers (8) zur Verklebung oder Verbindung mit weiteren Materialien versehen ist.

9. Nähkleid mit Funktionsnähten, hergestellt mindestens teilweise aus einem Folienlaminat nach einem oder mehreren der Ansprüche 1 bis 8.

10. Laderaumabdeckung oder Dachbahn, hergestellt aus einem Folienlaminat nach einem oder mehreren der Ansprüche 1 bis 8.

11. Verfahren zur Herstellung eines Folienlaminats (1) nach einem oder mehreren der Ansprüche 1 bis 8, bei dem Deckfolie und Unterfolie aus thermisch miteinander verschmelzbaren oder verbindbaren Materialien bestehen und durch die Maschenleerräume hindurch unter Aufbringen von Temperatur und Druck miteinander verschmolzen werden, vorzugsweise mit Hilfe von Walz- oder Kalanderwerken.
